# EUROPÄISCHE PATENTSCHRIFT

(11) **EP 2 158 991 B1**
(45) Veröffentlichungstag und Bekanntmachung des Hinweises auf die Patenterteilung: **24.01.2018**
(21) Anmeldenummer: 09010096.7
(22) Anmeldetag: 05.08.2009
(51) Int. Cl.: B23D 45/04, B23D 47/02, F16C 29/00

(54) **Kappsäge mit Zugfunktion**
Mitre saw with traction function
Scie circulaire dotée d'une fonction de traction

(30) Priorität: 02.09.2008 DE 202008011654 U
(43) Veröffentlichungstag der Anmeldung: 03.03.2010
(73) Patentinhaber: Metabowerke GmbH, 72622 Nürtingen (DE)
(72) Erfinder: Schulz, Reiner, 40229 Düsseldorf (DE)
(74) Vertreter: Lorenz, Markus

(56) Entgegenhaltungen:
- DE-A1-102005 031 025
- JP-A- 11 090 730
- US-A- 5 768 967
- US-A1- 2001 049 988
- US-A1- 2005 211 038

## Beschreibung

Die Erfindung betrifft eine Kappsäge mit Zugfunktion mit den Merkmalen des Oberbegriffs von Anspruch 1.

Kappsägen der in Rede stehenden Art sind seit Jahrzehnten bekannt (EP-A-1 557 231). Sie werden zur Bearbeitung aller Arten von Werkstoffen eingesetzt. Ein besonderes Anwendungsfeld finden Kappsägen bei der Holzbearbeitung. Sie sind aber auch für die Kunststoffbearbeitung und die Metallbearbeitung zu finden.

Eine typische Kappsäge hat ein um eine Querachse schwenkbar angebrachtes Sägeaggregat, dessen Sägeblatt aus einer angehobenen Ruhestellung in eine abgesenkte Sägestellung und umgekehrt schwenkbar ist. Mit dieser Bewegung des Sägeblattes kann ein auf einer Werkstückauflagefläche eines Trägers befindliches Werkstück abgeschnitten - gekappt - werden.

Kappsägen sind aber nicht nur mit um eine Querachse schwenkbar angebrachtem Sägeaggregat bekannt, sondern auch mit einem in Längsrichtung über die Werkstückauflagefläche ziehbaren Sägeaggregat als sog. Radialarmsägen.

Kappsägen sind schließlich auch in Form von Tischkreissägen mit in Längsrichtung verschiebbaren Sägeaggregat, das unter der Werkstückauflagefläche des Trägers sitzt, bekannt.

Die bekannte Kappsäge, von der die Erfindung ausgeht (DE-U-203 13 885), ist eine Kapp-, Gehrungs- und Zugsäge, mit der Kappschnitte, Gehrungsschnitte und Schifterschnitte (Doppel-Gehrungs-Schnitte) ausgeführt werden können. Wegen der außerdem wie bei einer Radialarmsäge realisierten Zugfunktion können die ausgeführten Schnitte länger sein als es der wirksame Schnitthalbmesser des Sägeblattes vorgibt.

Bei der bekannten Kappsäge ist das Sägeaggregat mittels einer Halterung am Träger angebracht. Bei der Kappfunktion wird das Sägeaggregat um eine Querachse aus der angehobenen Ruhestellung in die abgesenkte Sägestellung und umgekehrt geschwenkt.

An der Halterung, meist zwischen Halterung und Träger, ist hier im übrigen eine Neigungsverstellung vorgesehen. Die Neigungsverstellung dient dazu, das Sägeaggregat gegenüber dem Träger um eine in Sägerichtung verlaufende horizontale Schwenkachse schwenken zu können, um eben einen Gehrungsschnitt in gewünschtem Gehrungswinkel ausführen zu können. Dazu hat die Neigungsverstellung eine Neigungs-Schwenkachse.

Bei der bekannten Kappsäge ist auch eine Staubabsaugung am Sägeaggregat vorgesehen. Dazu befindet sich an der Kappsäge ein Absaugstutzen. An diesem kann ein Absaugschlauch oder ein Staubfangsack einer Staubfangvorrichtung angeschlossen werden.

Im Zusammenspiel der Neigungsverstellung einerseits und der Zugführung andererseits muß man erreichen, daß das Kreissägeblatt des Sägeaggregates in Mittelstellung (Neigung 0°) exakt senkrecht zur Werkstückauflagefläche ausgerichtet ist. Gleichzeitig sollen die Zugstangen in den zueinander parallelen Führungen der Halterung möglichst leicht laufend, jedoch möglichst spielfrei gelagert sein. Das alles steht noch unter der Randbedingung, daß im Betrieb trotz vorhandener Staubabsaugung einiges an Sägestaub anfällt.

Es hat sich gezeigt, daß in der Praxis das richtige Einstellen der Position des Kreissägeblattes bei allen Arten von Kappsägen mit Zugfunktion ziemlich schwierig ist.

Aus der deutschen Offenlegungsschrift DE 10 2005 031 025 A1 ist eine Gehrungssäge gemäß dem Oberbegriff des Anspruchs 1 bekannt, die einen Fußbereich, einen Halterungsbereich, der sich von dem Fußbereich von sich aus erstreckt, und eine Kreissägeneinheit umfasst, die an dem Halterungsbereich abgestützt ist. Ferner weist die Gehrungssäge einen Griff und ein Motorgehäuse auf. Die Kreissägeneinheit hält drehbar ein Kreissägeblatt. Weiterhin bildet der Fußbereich eine Werkstückauflagefläche.

Bei einer Ausführungsform ist ein erster Halterungsbereich an einem Halter ausgebildet, der zwei Durchgangsbohrungen zur Aufnahme von zwei sich hierdurch erstreckenden Rohren aufweist. Diese erstrecken sich parallel zueinander und sind relativ zu dem Halter verschiebbar in den Durchgangsbohrungen aufgenommen.

In einer der Durchgangsbohrungen ist ein Kugellager angeordnet, das die Gleitbewegung des Rohres glätten und vermeiden soll, dass das Rohr in der radialen Richtung der Durchgangsbohrung bewegt wird. In der zweiten Durchgangsbohrung sind Gleitteile bzw. Verschiebungsteile angeordnet, die mit Hilfe von Einstellbolzen radial verstellbar sind, sodass das Rohr in radialer Richtung der Durchgangsbohrung beweglich ist. Mit dieser Anordnung ist die seitliche Position des Rohres innerhalb der Durchgangsbohrung einstellbar durch Einstellung der seitlichen Positionen der Gleitteile durch Drehung der zugehörigen Bolzen, sodass eine Feineinstellung des Neigungswinkels des Kreissägenblatts bezüglich der oberen Oberfläche des Drehtischs und somit der Werkstückauflage erreichbar ist.

Vergleichbare Anordnungen sind ebenfalls aus den Dokumenten US 2005/0211038 A1, US 5,768,967, US 2001/049988 A1 und JP 11 090730 A bekannt.

Der Lehre liegt das Problem zugrunde, die Einstellung der Position des Sägeblattes bei einer Kappsäge mit Zugfunktion zu vereinfachen und zu verbessern.

Die zuvor aufgezeigte Problemstellung ist bei einer Kappsäge mit den Merkmalen des Oberbegriffs von Anspruch 1 durch die Merkmale des kennzeichnenden Teils von Anspruch 1 gelöst. Bevorzugte Ausgestaltungen und Weiterbildungen sind Gegenstand der Unteransprüche.

Erfindungsgemäß wird eine Zugstange in einer Führung praktisch spielfrei in einer Gleitführung geführt, die ihrerseits paßgenau in der Führung eingesetzt ist. Eine solche praktisch spielfrei führende Gleitführung kann insbesondere als Kugelbuchse ausgeführt sein. Demgegenüber ist die die andere Zugstange führende Führung mit einer Gleitführung ausgerüstet, die mit Spiel in diese Führung eingesetzt ist. Diese Gleitführung kann man also innerhalb der Führung geringfügig verlagern und mittels mindestens eines Fixierelementes, vorzugsweise zweier Fixierelemente, relativ zur Führung in radial unterschiedlichen Positionen an der Halterung fixieren. Damit läßt sich die geringfügige Korrektur der Neigung des Kreissägeblattes realisieren, die für eine optimale Ausrichtung gegenüber der Werkstückauflagefläche erforderlich ist.

Erfindungsgemäß ist zudem die mit Spiel eingesetzte und mittels des Fixierelementes fixierbare Gleitbuchse in ihrer fixierten Position ihrerseits zumindest abschnittsweise nochmals mittels eines Justierelementes, insbesondere in Form einer Justierschraube, radial nachjustierbar. Durch dieses Justierelement ist dauerhafte Spielfreiheit der Zugstange in dieser Gleitführung gewährleistet, da bei evtl. Verschleiß mittels des Justierelementes die Gleitbuchse selbst abschnittsweise, beispielsweise mit einer Federlasche, nachgestellt werden kann. Darüber hinaus kann der Benutzer das Justierelement auch dazu verwenden, den Gleitwiderstand der Zugstange in dieser Führung zu verändern und individuell einzustellen.

Grundsätzlich könnte auch die in der anderen Führung mit Spiel eingesetzte Gleitführung als Kugelbuchse ausgeführt sein. Hier hat es sich allerdings erwiesen, daß eine Gleitbuchse eine bessere Problemlösung schafft.

Die Einstellung der mit Spiel eingesetzten Gleitführung an der anderen Führung gegenüber der Halterung läßt sich mit mindestens einem im wesentlichen radial verlaufenden Langloch für das Fixierelement verwirklichen. Bevorzugt sind zwei Langlöcher oberhalb und unterhalb der Gleitführung vorgesehen und es wird mit zwei Fixierelementen, insbesondere Fixierschrauben gearbeitet.
Von besonderer Bedeutung ist eine konstruktive Lösung, die die beiden Gleitführungen in den Führungen der benachbarten Zugstangen miteinander verbindet. Dazu ist nach bevorzugter Lehre vorgesehen, daß die Gleitführung an der anderen Führung an einem Schwenkhebel ausgebildet ist, der auf einer Flachseite der Halterung angeordnet ist und sich bis zu der Gleitführung an der einen Führung erstreckt und dort schwenkbar gelagert ist. Insbesondere ist vorteilhaft, wenn die Gleitführung an der einen Führung, insbesondere also die Kugelbuchse, aus der Halterung zur Flachseite hin herausragt und eine Schwenkachse für einen Schwenklagerring des Schwenkhebels bildet.

Bei der zuvor erläuterten Konstruktion mit dem die Führungen verbindenden Schwenkhebel empfiehlt es sich natürlich, auch die Langlöcher in den Schwenkhebel zu integrieren.

Bevorzugte Ausgestaltungen des Schwenkhebels sind Gegenstand der weiteren Unteransprüche.

Besondere Bedeutung kommt dabei einer konstruktiven Lösung zu, die dadurch gekennzeichnet ist, daß der Schwenkhebel auf der Flachseite der Halterung flächig anliegt und so breit ausgebildet ist, daß er alle Spalte an den Führungen abdeckt und gegen Staubeintritt schützt. Hiermit erhält der Schwenkhebel eine weitere Funktion, nämlich die der Staubabdeckung der gefährdeten Spalten der Zugführung. Der Schwenkhebel beinhaltet dann drei Funktionen, die des seitlichen Abstandshalters, die der Gleitlagerung und die der Staubabdeckung. Durch diesen Schwenkhebel ist ein sehr einfaches und exaktes Einstellen der Lage des Sägeblattes möglich. Gemäß bevorzugter Konstruktion wird die ohnehin vorstehende Kugelbuchse ab der einen Führung gleichzeitig als Schwenklager des Schwenkhebels genutzt.

Im folgenden wir die Erfindung anhand einer lediglich ein Ausführungsbeispiel darstellenden Zeichnung näher erläutert. Bei der Erläuterung der Zeichnung werden auch weitere Vorteile und Besonderheiten der Erfindung im Detail angesprochen und erläutert. In der Zeichnung zeigt
- Fig. 1: in perspektivischer Darstellung ein Ausführungsbeispiel einer erfindungsgemäßen Kappsäge,
- Fig. 2: in perspektivischer Ansicht ein Ausführungsbeispiel einer Halterung der Kappsäge aus Fig. 1,
- Fig. 3: in perspektivischer Ansicht die Halterung aus Fig. 2 mit angesetztem Schwenkhebel und
- Fig. 4: den Schwenkhebel der Halterung aus Fig. 3 in zwei unterschiedlichen perspektivischen Ansichten.

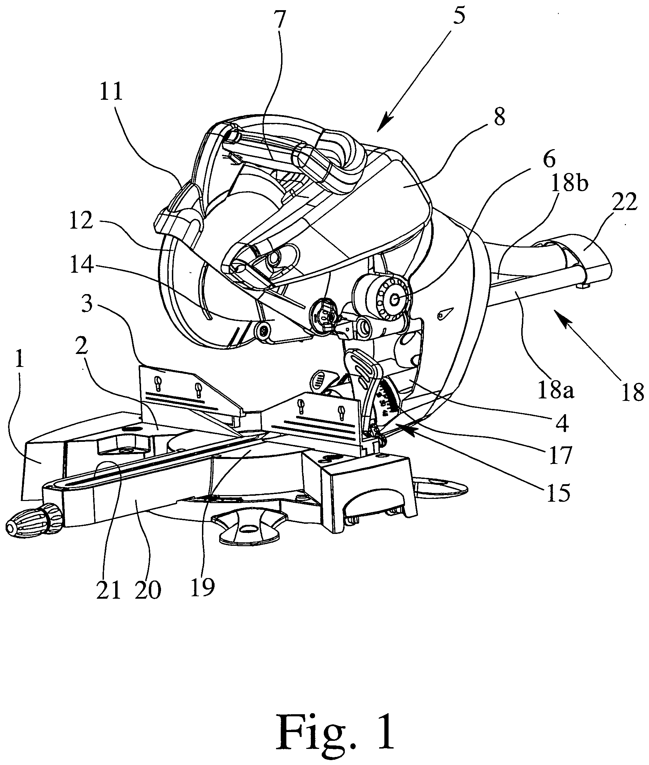

Fig. 1 zeigt eine kombinierte Kapp-, Gehrungs- und Zugsäge. Voraussetzung für die Realisierung der Lehre der Erfindung ist jedoch nur eine Kappsäge mit Zugfunktion, und zwar mit Sägeaggregat oberhalb der Werkstückauflagefläche des Trägers oder auch unterhalb der Werkstückauflagefläche des Trägers. Das ist im allgemeinen Teil der Beschreibung bereits erläutert worden.

Die in Fig. 1 dargestellte Kappsäge weist zunächst einen Träger 1 auf, der eine Werkstückauflagefläche 2 bildet. Das rückwärtige Ende der Werkstückauflagefläche 2 bildet hier eine Anschlagschiene 3, an der ein Werkstück, beispielsweise eine Holzleiste, angelegt werden kann. Am Träger 1 ist eine Halterung 4 angebracht, die rückwärtig hinter der Werkstückauflagefläche 2 liegt.

An der Halterung 4 oberhalb des Trägers 1 angebracht ist ein Sägeaggregat 5. Dieses ist im dargestellten und bevorzugten Ausführungsbeispiel um eine Querachse 6 schwenkbar und befindet sich oberhalb der Werkstückauflagefläche 2.

Bei einer Radialarmsäge entfiele die Querachse. Das Sägeaggregat würde hier an Zugstangen gezogen, die auslegerartig über die Werkstückauflagefläche ragen.

Bei der dargestellten Kappsäge wird das Sägeaggregat 5 um die Querachse 6 aus einer angehobenen Ruhestellung, die in Fig. 1 zu erkennen ist, in eine abgesenkte Sägestellung, die hier nicht dargestellt ist, und umgekehrt geschwenkt. Das Sägeaggregat 5 ist dabei in Richtung der Ruhestellung, also nach oben hin vorgespannt, insbesondere durch eine Feder. Dadurch kehrt das Sägeaggregat 5, wenn man es losläßt, von selbst wieder in die angehobene Ruhestellung zurück.

Das Sägeaggregat 5 weist auf,
- einen Betätigungshandgriff 7,
- einen Antriebsmotor 8
- ein vom Antriebsmotor 8 angetriebenes, auf einer Welle 9 gelagertes Sägeblatt 10,
- eine das Sägeblatt 10 von oben her etwa über die Hälfte abdeckende feststehende Schutzhaube 11,
- eine Pendelschutzhaube 12, die in der in Fig. 1 dargestellten Ruhestellung den unteren Teil des Zahnkranzes des Sägeblattes 10 abdeckt,
- einen Absaugstutzen 13 einer Staubfangvorrichtung und
- eine im Bereich zwischen der Halterung 4 und der Welle 9 unterhalb der feststehenden Schutzhaube 11 angeordnete bewegliche Staubfanghaube 14.

Letzteres ist eine besondere Ausstattung der Kappsäge, die nicht immer verwirklicht sein muß, aber in besonders zweckmäßiger Weise hier verwirklicht ist.

Die dargestellte Kappsäge hat neben der zuvor bereits beschriebenen Kappfunktion eine Gehrungsfunktion. Es handelt sich also zunächst bereits um eine Kapp- und Gehrungssäge.

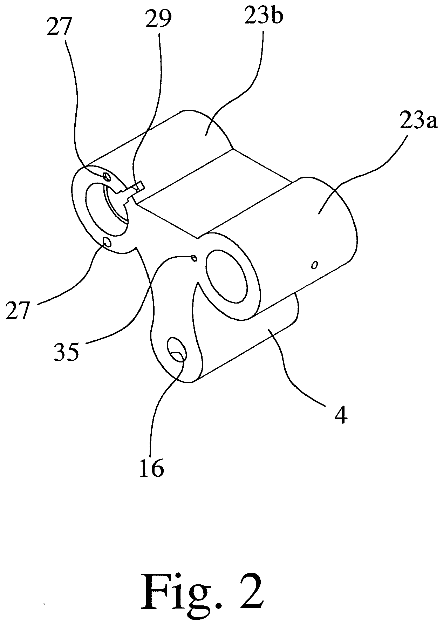

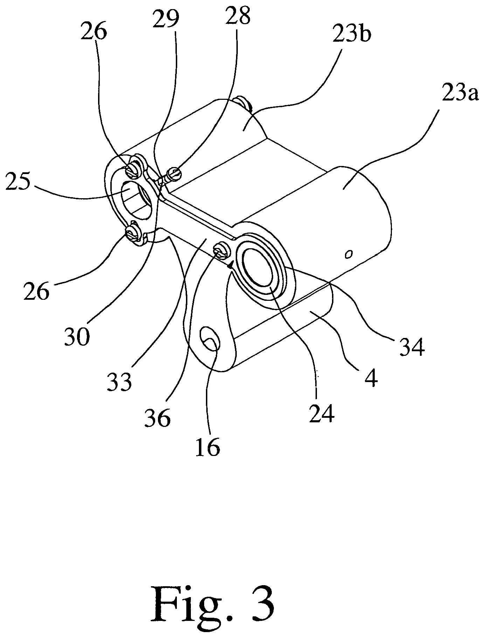

Dazu weist die Kappsäge an der Halterung 4 ihrerseits eine Neigungsverstellung 15 auf. Mit der Neigungsverstellung 15 läßt sich das Sägeaggregat 5 gegenüber dem Träger 1 um eine in Sägerichtung verlaufende, horizontale Neigungs-Schwenkachse 16 schwenken. Fig. 2 und 3 lassen die Position der Neigungs-Schwenkachse 16 an der Halterung 4 erkennen. Hier verläuft die Neigungs-Schwenkachse 16 körperlich an der angegebenen Stelle.

Grundsätzlich ist auch eine kulissenartige Gestaltung möglich, bei der die Neigungs-Schwenkachse 16 nur geometrisch vorhanden ist und die Schwenkbewegung um diese virtuelle Schwenkachse über andere Konstruktionsmittel verwirklicht wird.

An der Neigungsverstellung 15 erkennt man in Fig. 1 eine Winkelskala 17, an der man den eingestellten Neigungswinkel ablesen kann. Durch die Neigung um die Neigungs-Schwenkachse 16 läßt sich der Gehrungswinkel des auszuführenden Sägeschnittes einstellen und an der Winkelskala 17 ablesen.

Die dargestellte und bevorzugte Kappsäge hat jedoch nicht nur eine Kappfunktion und eine Gehrungsfunktion, sie hat auch eine Zugfunktion. Das Sägeaggregat 5 ist an der Halterung 4 nicht nur mittels der Querachse 6 schwenkbar gelagert, sondern zusätzlich auch noch mittels einer in Sägerichtung verlaufenden Zugführung 18 aus zwei parallel zueinander verlaufenden Zugstangen 18a, b verschiebbar gelagert. Mit dieser Zugfunktion läßt sich der vom Sägeaggregat 5 ausführbare Sägeschnitt verlängern.

Das dargestellte und bevorzugte Ausführungsbeispiel zeigt am Träger 1 einen eingelassenen Drehteller 19 mit einem nach vorne vorspringenden Auslegerarm 20 und mit einem Eintauchschlitz 21, in den in Sägestellung der Rand des Sägeblattes 10 eintritt. Die Länge des Eintauchschlitzes 21 ist wesentlich größer als es für den Durchmesser des Sägeblattes 10 erforderlich ist. Das liegt an der zuvor erläuterten Zugführung 18, die eben auch ein Ziehen des Sägeblattes 10 durch das Werkstück über einen bestimmten Weg erlaubt.

In Fig. 1 erkennt man ferner, daß zwei parallel zueinander liegende Zugstangen 18a, 18b die Zugführung 18 bilden und rückwärtig mittels eines Abstandshalters 22 fest miteinander verbunden sind. Die Zugstangen 18a, 18b sind mit dem Sägeaggregat 5 fest verbunden und laufen an der Halterung 4 in in Fig. 2 und 3 erkennbaren Führungen 23a, 23b.

Grundsätzlich ist auch eine kinematisch umgekehrte Anordnung mit feststehenden Zugstangen und darin mittels Führungen verschiebbar geführtem Sägeaggregat möglich. Das gilt auch, wenn keine Kappfunktion im engeren Sinne, sondern nur eine Zugfunktion (Radialarmsäge oder Tischkreissäge mit Zugfunktion) vorgesehen ist, die gleichzeitig die Kappfunktion erfüllt.

Fig. 2 zeigt die Halterung 4 des bevorzugten Ausführungsbeispiels einer Kappsäge mit Zugfunktion mit den beiden Führungen 23a, 23b. Fig. 3 zeigt, daß in der einen Führung 23a eine die entsprechende Zugstange 18a, die hier nicht eingezeichnet ist, praktisch spielfrei führende Gleitführung 24 paßgenau eingesetzt ist. Bei dieser Gleitführung 24 handelt es sich im bevorzugten Ausführungsbeispiel um eine Kugelbuchse. Es kann sich aber auch grundsätzlich um eine andere Art der Führung handeln.

In der anderen Führung 23b, deren zugeordnete Zugstange 18b ebenfalls nicht eingezeichnet ist, findet sich in Fig. 3 eine Gleitführung 25, die mit Spiel eingesetzt ist. Fig. 3 läßt erkennen, daß diese Gleitführung 25 mittels mindestens eines Fixierelementes 26, insbesondere einer Fixierschraube, in relativ zur Führung 23b radial unterschiedlichen Positionen an der Halterung fixierbar ist. Das in Fig. 2 und 3 dargestellte Ausführungsbeispiel läßt in Fig. 2 oberhalb und unterhalb der anderen Führung 23b jeweils eine Gewindebohrung 27 erkennen und zeigt in Fig. 3, wie hier oberhalb und unterhalb der Gleitführung 25 die beiden Fixierelemente 26 (Fixierschrauben) positioniert sind.

Im dargestellten und bevorzugten Ausführungsbeispiel ist die Gleitführung 25 in der anderen Führung 23b tatsächlich als echte Gleitbuchse, also nicht als Kugelbuchse ausgeführt. Eine Kugelbuchse trägt doch wesentlich stärker in der Dicke auf und läßt sich auch nicht so gut justieren wie eine reine Gleitbuchse.

Das in Fig. 2 und Fig. 3 dargestellte Ausführungsbeispiel zeigt noch eine weitere Besonderheit dieser Konstruktion, nämlich daß die Gleitbuchse in durch das Fixierelement 26 fixierter Position ihrerseits zumindest abschnittsweise nochmals mit einem Justierelement 28, insbesondere einer Justierschraube, radial nachjustierbar ist. Im dargestellten und bevorzugten Ausführungsbeispiel ist dabei vorgesehen, daß das Justierelement 28 in einer Ausnehmung 29 der Halterung 4 angeordnet ist.

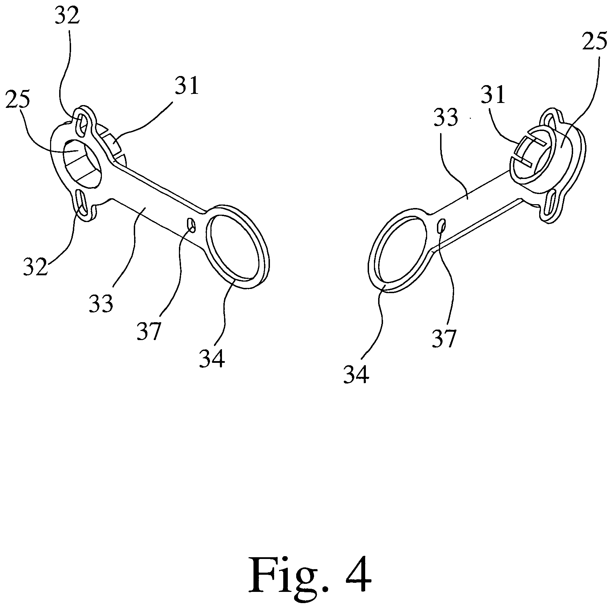

Fig. 3 läßt erkennen, daß sich die das Justierelement 28 bildende Justierschraube eingeschraubt in einer Widerlagermutter seitlich eingesteckt in der Ausnehmung 29 befindet. Wird hier die das Justierelement 28 bildende Justierschraube angezogen, so wird die in Fig. 4 erkennbare abgeteilte Lasche 31 der Gleitführung 25 nach innen gedrückt und an die in der Führung 23b laufende Zugstange 18b angedrückt. Dadurch kann man den Zugwiderstand der Zugführung 18 einstellen. Außerdem ist eine verschleißbezogene Nachstellung dieser Gleitführung 25 gewährleistet.

Zur Realisierung der Verstellbarkeit der Gleitführung 25 an der anderen Führung 23b sind hier oberhalb und unterhalb der Fixierelemente 26 zugeordnete Langlöcher 32 vorgesehen. Dadurch läßt sich dauerhaft die Relativlage der Gleitführung 25 zur zugeordneten Führung 23b im Rahmen des insgesamt vorhandenen Spiels einstellen. Dadurch läßt sich die Neigung des Sägeblattes gegenüber der Werkstückauflagefläche 2 einstellen.

Fig. 2 und 3 lassen eine weitere Besonderheit der erfindungsgemäßen Konstruktion erkennen, die dadurch gekennzeichnet ist, daß die Gleitführung 24 an der anderen Führung 23b an einem Schwenkhebel 33 ausgebildet ist, der auf einer Flachseite der Halterung 4 angeordnet ist und sich bis zu der Gleitführung 24 an der einen Führung 23a erstreckt und dort schwenkbar gelagert ist. Dieser Schwenkhebel 33 stellt also einen Abstandshalter für die seitliche Beabstandung der beiden Zugstangen 18a, 18b dar. Die Gleitführung 25 ist Teil des Schwenkhebels 33.

Im dargestellten und bevorzugten Ausführungsbeispiel ist dabei ferner vorgesehen, daß die Gleitführung 24 an der einen Führung 23a, insbesondere also die Kugelbuchse, aus der Halterung 4 zur Flachseite hin herausragt und eine Schwenkachse für einen Schwenklagerring 34 des Schwenkhebels 33 bildet. Im einzelnen ist hier vorgesehen, daß auch die Langlöcher 32 für die Fixierelemente 26 am Schwenkhebel 33 oberhalb und unterhalb der Gleitführung 25 ausgebildet sind. Dabei bildet der Schwenklagerring 34 mit dem vorstehenden Teil der Gleitführung 24 an der einen Führung 23a das Schwenklager für den Schwenkhebel 33. Dementsprechend haben die Langlöcher 32 zweckmäßigerweise einen diesen Schwenkradius entsprechenden bogenförmigen Verlauf.

Fig. 2 bis 4 zeigen ferner rechts nahe der Gleitführung 24 noch eine Gewindebohrung 35. Diese gehört zu einem Befestigungselement 36, insbesondere in Form einer Befestigungsschraube, die nahe dem an der einen Führung 23a angeordneten Ende des Schwenkhebels 33 vorgesehen ist, um den Schwenkhebel 33 an der Halterung 4 auch hier zu befestigen. Dadurch wird sichergestellt, daß der Schwenkhebel 33 an der Halterung 4 sicher festgelegt ist und nicht unter Belastung wegknickt.

Auch dem Befestigungselement 36 ist ein im wesentlichen kreisbogenförmig verlaufendes Langloch 37 im Schwenkhebel 33 zugeordnet, das man in Fig. 4 besonders gut erkennt.

Fig. 3 und 4 kann man entnehmen, daß der Schwenkhebel 33 im dargestellten und bevorzugten Ausführungsbeispiel besonders flach und breit ausgeführt ist. Das ist nicht von ungefähr so gemacht. Es ist nämlich vorgesehen, daß der Schwenkhebel 33 auf der Flachseite der Halterung 4 flächig anliegt und so breit ausgebildet ist, daß er alle Spalte an den Führungen 23a, 23b abdeckt und gegen Staubeintritt schützt. Damit erfüllt der Schwenkhebel 33, der ja als der dem Sägeaggregat 11 zugewandten Seite der Halterung 4 angeordnet ist, zusätzlich noch die Funktion einer Staubabdeckung oder Staubabdichtung.

Schließlich ist noch darauf hinzuweisen, daß der Schwenkhebel 33 zweckmäßigerweise aus einem Kunststoffmaterial, insbesondere einem faserverstärktem Kunststoffmaterial bestehen kann. Insbesondere kommt ein Kunststoffmaterial in Frage, das ebenfalls im Bereich der Gleitführung 25 besonders gute Gleiteigenschaften aufweist. Das kann man durch Beimischung entsprechender Zusätze oder durch eine Beschichtung an den entsprechenden Flächen erreichen.

## Patentansprüche

1. Kappsäge mit
einem Träger (1), der eine Werkstückauflagefläche (2) bildet,
einer am Träger (1) angebrachten Halterung (4) und
einem mittels der Halterung (4) angebrachten Sägeaggregat (5),
wobei das Sägeaggregat (5) an der Halterung (4) mittels einer in Sägerichtung verlaufenden Zugführung (18) aus zwei parallel zueinander verlaufenden Zugstangen (18a, 18b) verschiebbar gelagert ist und
wobei die Zugstangen (18a, 18b) an der Halterung (4) in zueinander parallelen Führungen (23a, b) verschiebbar gelagert sind, wobei in einer Führung (23a) eine die Zugstange (18a) praktisch spielfrei führende Gleitführung (24) paßgenau eingesetzt ist, wobei in der anderen Führung (23b) eine die Zugstange (18b) führende Gleitführung (25) mit Spiel eingesetzt und mittels eines Fixierelementes (26), insbesondere einer Fixierschraube, in relativ zur Führung (23b) radial unterschiedlichen Positionen an der Halterung (4) fixierbar ist, **dadurch gekennzeichnet, daß** die Gleitführung (25) in der anderen Führung (23b) als Gleitbuchse ausgeführt ist, und daß die Gleitbuchse in durch das Fixierelement (26) fixierter Position ihrerseits zumindest abschnittsweise nochmals mit einem Justierelement (28), insbesondere einer Justierschraube, radial nachjustierbar ist.

2. Kappsäge nach Anspruch 1, **dadurch gekennzeichnet,**
**daß** die Gleitführung (24) in der einen Führung (23a) als Kugelbuchse ausgeführt ist.

3. Kappsäge nach Anspruch 1 oder 2, **dadurch gekennzeichnet,**
**daß** das Justierelement (28) in einer Ausnehmung (29) der Halterung (4) angeordnet ist.

4. Kappsäge nach einem der Ansprüche 1 bis 3, **dadurch gekennzeichnet,**
**daß** die Gleitführung (25) an der anderen Führung (23b) mit mindestens einem im wesentlichen radial verlaufenden Langloch (32) für das Fixierelement (26) versehen ist.

5. Kappsäge nach einem der Ansprüche 1 bis 4, **dadurch gekennzeichnet, daß** die Gleitführung (25) an der anderen Führung (23b) an einem Schwenkhebel (33) ausgebildet ist, der auf einer Flachseite der Halterung (4) angeordnet ist und sich bis zu der Gleitführung (24) an der einen Führung (23a) erstreckt und dort schwenkbar gelagert ist.

6. Kappsäge nach Anspruch 5, **dadurch gekennzeichnet,**
**daß** die Gleitführung (24) an der einen Führung (23a), insbesondere also die Kugelbuchse, aus der Halterung (4) zur Flachseite hin herausragt und eine Schwenkachse für einen Schwenklagerring (34) des Schwenkhebels (33) bildet.

7. Kappsäge nach Anspruch 5 oder 6, **dadurch gekennzeichnet,**
**daß** das mindestens eine Langloch (32) am Schwenkhebel (33) ausgebildet ist und, vorzugsweise, einen bogenförmigen Verlauf entsprechend dem Schwenkradius des Schwenkhebels (33) aufweist.

8. Kappsäge nach einem der Ansprüche 5 bis 7, **dadurch gekennzeichnet,**
**daß** nahe dem an der einen Führung (23a) angeordneten Ende des Schwenkhebels (33) ein Befestigungselement (36) zur Befestigung des Schwenkhebels (33) an der Halterung (4) vorgesehen ist.

9. Kappsäge nach Anspruch 8, **dadurch gekennzeichnet,**
**daß** das Befestigungselement (36) eine ein kreisbogenförmiges Langloch (37) im Schwenkhebel (33) durchsetzende Befestigungsschraube ist.

10. Kappsäge nach einem der Ansprüche 5 bis 9, **dadurch gekennzeichnet,**
**daß** der Schwenkhebel (33) auf der Flachseite der Halterung (4) flächig anliegt und so breit ausgebildet ist, daß er alle Spalte an den Führungen (23a, 23b) abdeckt und gegen Staubeintritt schützt.

11. Kappsäge nach Anspruch 10, **dadurch gekennzeichnet,**
**daß** der Schwenkhebel (33) auf der dem Sägeaggregat (5) zugewandten Seite der Halterung (4) angeordnet ist.

12. Kappsäge nach einem der Ansprüche 5 bis 11, **dadurch gekennzeichnet,**
**daß** der Schwenkhebel (33) aus einem vorzugsweise faserverstärktem Kunststoffmaterial besteht, daß, vorzugsweise, das Kunststoffmaterial jedenfalls im Bereich der Gleitführung (25) besonders gute Gleiteigenschaften aufweist.

## Claims

1. Crosscut saw having
a carrier (1) which forms a workpiece support surface (2), a holder (4) attached to the carrier (1), and a saw unit (5) attached by means of the holder (4),
wherein the saw unit (5) is mounted on the holder (4) so as to be displaceable by means of a pull guide (18), extending in the sawing direction, made up of two pull rods (18a, 18b) that extend parallel to one another, and
wherein the pull rods (18a, 18b) are mounted on the holder (4) so as to be displaceable in mutually parallel guides (23a, b), wherein a sliding guide (24) that guides the pull rod (18a) in a practically play-free manner is inserted with a precise fit in one guide (23a), wherein a sliding guide (25) that guides the pull rod (18b) is inserted with play in the other guide (23b) and is fixable to the holder (4) in radially different positions relative to the guide (23b) by means of a fixing element (26), in particular a fixing screw, **characterized in that** the sliding guide (25) in the other guide (23b) is embodied as a plain bushing, and **in that**, in a position fixed by the fixing element (26), the plain bushing is for its part radially readjustable at least partially by way of an adjusting element (28), in particular an adjusting screw.

2. Crosscut saw according to Claim 1, **characterized in that** the sliding guide (24) in the one guide (23a) is embodied as a ball bushing.

3. Crosscut saw according to Claim 1 or 2, **characterized in that** the adjusting element (28) is arranged in a recess (29) in the holder (4).

4. Crosscut saw according to one of Claims 1 to 3, **characterized in that** the sliding guide (25) on the other guide (23b) is provided with at least one substantially radially extending slot (32) for the fixing element (26).

5. Crosscut saw according to one of Claims 1 to 4, **characterized in that** the sliding guide (25) on the other guide (23b) is formed on a pivot lever (33) which is arranged on a flat side of the holder (4) and extends as far as the sliding guide (24) on the one guide (23a) and is mounted in a pivotable manner there.

6. Crosscut saw according to Claim 5, **characterized in that** the sliding guide (24) on the one guide (23b), i.e. in particular the ball bushing, projects out of the holder (4) towards the flat side and forms a pivot axis for a pivot bearing ring (34) of the pivot lever (33).

7. Crosscut saw according to Claim 5 or 6, **characterized in that** the at least one slot (32) is formed in the pivot lever (33) and, preferably, has an arcuate profile corresponding to the pivot radius of the pivot lever (33).

8. Crosscut saw according to one of Claims 5 to 7, **characterized in that** a fastening element (36) for fastening the pivot lever (33) to the holder (4) is provided close to that end of the pivot lever (33) that is arranged on the one guide (23a).

9. Crosscut saw according to Claim 8, **characterized in that** the fastening element (36) is a fastening screw passing through a slot (37) in the form of a circular arc in the pivot lever (33).

10. Crosscut saw according to one of Claims 5 to 9, **characterized in that** the pivot lever (33) bears flat against the flat side of the holder (4) and is configured to be so wide that it covers any gaps in the guides (23a, 23b) and protects them from dust entering.

11. Crosscut saw according to Claim 10, **characterized in that** the pivot lever (33) is arranged on that side of the holder (4) that faces the saw unit (5).

12. Crosscut saw according to one of Claims 5 to 11, **characterized in that** the pivot lever (33) consists of a preferably fibre-reinforced plastics material, and **in that**, preferably, the plastics material has particularly good sliding properties, at least in the region of the sliding guide (25).

## Revendications

1. Scie à onglet
avec un support (1), qui forme une surface d'appui (2) d'une pièce à travailler d'un élément de maintien (4) lié au support (1) et d'un agrégat de sciage (5) tenu par l'élément de maintien (4),
dans lequel l'agrégat de sciage (5) est mobile en coulissement au moyen d'un guidage par traction (18) dans la direction de sciage, et constitué de deux barres de traction (18a, 18b), parallèles l'une par rapport à l'autre, et
dans lequel les barres de traction (18a, 18b) sont montées de façon coulissante, à l'élément de maintien (4) dans des éléments de guidage parallèles entre eux, (23a, b), dans lequel est incorporé dans un des éléments de guidage (23a) une tige de traction (18a), commandant pratiquement sans jeu le guidage de coulissement (24) de façon exacte, dans lequel, dans l'autre élément de guidage (23b), le guidage de coulissement (25) commandant la barre de traction (18b) est installé avec du jeu et au moyen d'un élément de fixation (26), en particulier d'une vis de fixation, dans des positions radiales différentes relativement à l'élément de guidage (23b) sur l'élément de maintien (4), **caractérisée en ce que** le guidage de coulissement (25) est aménagé dans l'autre élément de guidage (23b) comme boîte de glissement, et
**en ce que** la boîte de glissement, dans la position fixée par l'élément de fixation (26), est de son côté, au moins partiellement, encore une fois radialement réajustable, avec un élément d'ajustage (28), en particulier d'une vis d'ajustage.

2. Scie à onglet selon la revendication 1, **caractérisée en ce que** le guidage de glissement (24) est réalisé sous la forme d'un coussinet sphérique dans un élément de guidage (23a).

3. Scie à onglet selon les revendications 1 ou 2, **caractérisée en ce que** l'élément d'ajustage (28) est constitué d'un évidement (29) de l'élément de maintien (4).

4. Scie à onglet selon l'une des revendications 1 à 3, **caractérisée en ce que**,
le guidage de glissement (25) de l'autre élément de guidage (23b) est équipé d'au moins une ouverture allongée (32) sensiblement radiale pour assurer l'élément de fixation (26).

5. Scie à onglet selon l'une des revendications 1 à 4, **caractérisée en ce que**,
le guidage de glissement (25) de l'autre élément de guidage (23b) est formé sur un levier de basculement (33) qui est disposé sur un côté plat de l'élément de maintien (4) et qui s'étend jusqu'au guidage de glissement (24) à l'un des éléments de guidage (23a) et se trouve monté pivotant sur lui.

6. Scie à onglet selon la revendication 5, **caractérisée en ce que**,
le guidage de glissement (24) s'extrait de l'élément de maintien (4) vers le côté plat à l'un des éléments de guidage (23a), en particulier donc du coussinet sphérique, et forme un axe de pivotement pour une bague de pivotement (34) de l'axe de basculement (33).

7. Scie à onglet selon les revendications 5 ou 6, **caractérisée en ce que**, au moins une ouverture allongée (32) est formée sur l'axe de basculement (33) et de préférence, présente une extension incurvée correspondant au diamètre de l'incurvation de l'axe de basculement (33).

8. Scie à onglet selon l'une des revendications 5 à 7, **caractérisée en ce que**,
à proximité de l'extrémité de l'un des éléments de guidage (23a) de l'axe de basculement (33), un élément de fixation (36) est prévu pour la fixation de l'axe de basculement (33) à l'élément de maintien (4).

9. Scie à onglet selon la revendication 8, **caractérisée en ce que**, l'élément de fixation (36) est constitué d'une vis de fixation (37) traversant l'ouverture allongée de l'axe de basculement (33).

10. Scie à onglet selon l'une des revendications 5 à 9, **caractérisée en ce que**,
l'axe de basculement (33) s'appuie directement sur le côté plat de l'élément de maintien (4) et est réalisé de façon suffisamment large pour qu'il recouvre tous les éléments de guidage (23a, 23b) et protège contre l'intrusion de poussière.

11. Scie à onglet selon la revendication 10, **caractérisée en ce que**,
l'axe de basculement (33) est disposé sur le côté orienté vers l'agrégat de sciage (5) de l'élément de maintien (4).

12. Scie à onglet selon l'une des revendications 5 à 11, **caractérisée en ce que**,
l'axe de basculement (33) est de préférence réalisé en un matériau en un matériau synthétique renforcé par des fibres, **en ce que** de préférence le matériau synthétique présente, en tout cas dans le secteur du guidage de glissement (25), des caractéristiques de glissement particulièrement intensives.
